(19) Europäisches Patentamt / European Patent Office / Office européen des brevets

(11) EP 3 514 207 A1

(12) **EUROPÄISCHE PATENTANMELDUNG**

(43) Veröffentlichungstag:
**24.07.2019 Patentblatt 2019/30**

(51) Int Cl.:
***C09D 9/04*** *(2006.01)* ***C11D 17/00*** *(2006.01)*

(21) Anmeldenummer: **18152315.0**

(22) Anmeldetag: **18.01.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Henkel AG & Co. KGaA**
**40589 Düsseldorf (DE)**

(72) Erfinder:
- **SINNWELL, Sebastian**
**40239 Düsseldorf (DE)**
- **YEGUDIN, Eugen**
**51145 Köln (DE)**
- **KLEMMER, Anna**
**40597 Düsseldorf (DE)**
- **KOLT, Christian**
**40545 Düsseldorf (DE)**

# (54) VERFAHREN ZUM ENTLACKEN UNTER ANWENDUNG EINER MIKROEMULSION MIT NIEDRIGEM ÖLGEHALT

(57) Die vorliegende Erfindung betrifft ein Verfahren zur Abreinigung von Farben, Lacken und Anstrichen auf Basis organischer Bindemittelsysteme von harten Oberflächen (="Entlacken") mittels einer Wasser basierten Reinigungsflüssigkeit enthaltend neben Wasser, mindestens ein Amphiphil und einen Anteil eines Öls in einer Menge von weniger als 10 Gew.-% bezogen auf die Reinigungsflüssigkeit, wobei die Reinigungsflüssigkeit eine Mikroemulsion der zuvor genannten Komponenten umfasst. Das Verfahren kann insbesondere zur Reinigung von Lackapplikationsvorrichtungen angewandt werden, wobei die Applikationsvorrichtung zur Abreinigung mit der Reinigungsflüssigkeit beschickt wird. Die vorliegende Erfindung betrifft ferner eine Reinigungsflüssigkeit die weitestgehend frei von flüchtigen organischen Verbindungen formuliert werden kann.

Abbildung 1

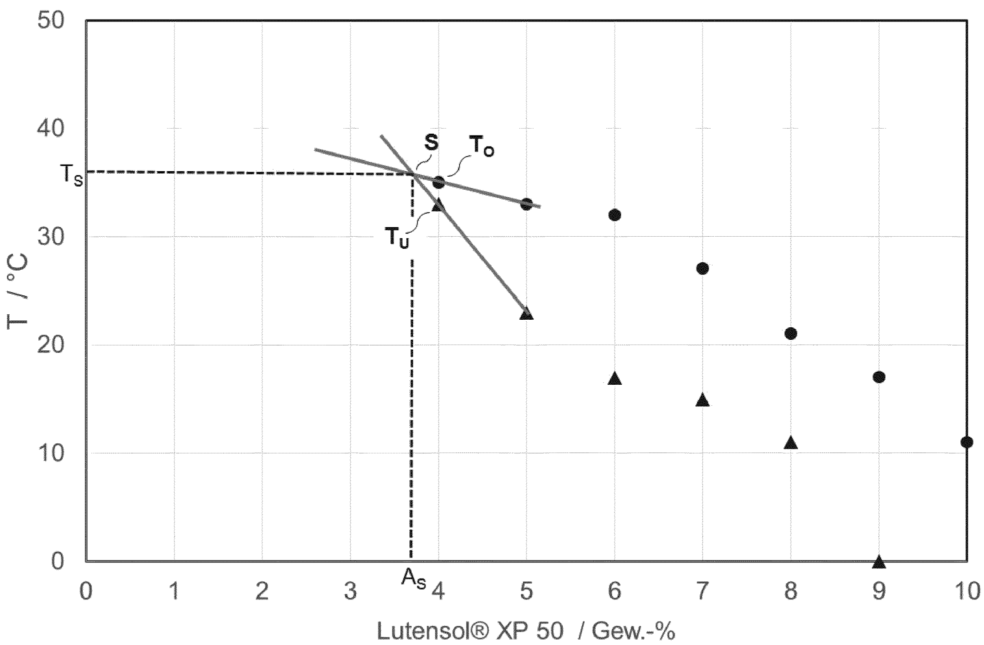


EP 3 514 207 A1

Printed by Jouve, 75001 PARIS (FR)

## Beschreibung

Die vorliegende Erfindung betrifft ein Verfahren zur Abreinigung von Farben, Lacken und Anstrichen auf Basis organischer Bindemittelsysteme von harten Oberflächen (="Entlacken") mittels einer Wasser basierten Reinigungsflüssigkeit enthaltend neben Wasser, mindestens ein Amphiphil und einen Anteil eines Öls in einer Menge von weniger als 10 Gew.-% bezogen auf die Reinigungsflüssigkeit, wobei die Reinigungsflüssigkeit eine Mikroemulsion der zuvor genannten Komponenten umfasst. Das Verfahren kann insbesondere zur Reinigung von Lackapplikationsvorrichtungen angewandt werden, wobei die Applikationsvorrichtung zur Abreinigung mit der Reinigungsflüssigkeit beschickt wird. Die vorliegende Erfindung betrifft ferner eine Reinigungsflüssigkeit die weitestgehend frei von flüchtigen organischen Verbindungen formuliert werden kann.

Zum Entlacken von insbesondere metallischen Gegenständen sind vielfältige Entlackungsmittel auf wässriger Basis oder auf Basis von organischen Lösungsmitteln bekannt. Deren Wirkung beruht auf unterschiedlichen Mechanismen. Organische Lösungsmittel können in die Lackschichten eindiffundieren, diese aufquellen und zum Abplatzen von der Unterlage bringen. Reaktive Entlackungsmittel, wie beispielsweise stark sauer oder stark alkalisch eingestellte Mittel, können mit dem Bindemittel des Lacks reagieren und dieses chemisch spalten. Hierdurch wird die BindemittelMatrix aufgelöst, so dass die Lackschicht zerfällt. Bei dieser chemischen Reaktion werden Wirkstoffe wie beispielsweise Alkalien verbraucht. In der Regel enthalten Entlackungsmittel sowohl Wirkstoffe, die in die Lackschicht eindringen und diese aufquellen, als auch solche, die das Bindemittel durch chemischen Angriff aufspalten. So lehrt die DE 100 14 579 A1 für die Entlackung von Teilen zweiphasige wässrig-alkalische Entlackungsmittel zu verwenden. Diese Entlackungsmittel bestehen aus Natron- oder Kalilauge und einem Gemisch aus hochsiedenden Komponenten der Klassen Alkohole, Glykole, Glykolether und anderen Hochsiedern.

Beim Einsatz dieser Entlackungsmittel umfasst der Systemtank zur Entlackung eine untere Phase, bestehend aus wässriger Lauge und darin gelösten organischen Lösungsmitteln bis zur Sättigungskonzentration und einer oberen Phase, bestehend aus organischen Lösungsmitteln, die mit Natron- oder Kalilauge gesättigt sind. Der Volumenanteil dieser unteren Phase liegt üblicherweise bei 30% bis 80%. Derartige zweiphasige Entlackungsmittel sind weniger geeignet, wenn die Entlackung durch Entnahme von Teilvolumina aus dem Systemtank erfolgt und die abzureinigenden Oberflächen mit dem Mittel besprüht werden oder selbiges durch eine Lackiervorrichtung gepumpt wird. Zumindest eine fortwährende Homogenisierung der Phasen ist dann erforderlich, um zu gewährleisten, dass die zu reinigenden Oberflächen mit beiden Phasen in Kontakt treten und die zuvor skizzierte Wirkungsweise und Entlackung eintritt.

Entsprechend ist in der DE 100 14 579 A1 ein Verfahren zum Entlacken formuliert, bei dem die abzureinigende Oberfläche nur mit der kontinuierlichen wässrigen Phase des Reinigungsmittels enthaltend geringe Mengen der in der wässrigen Phase nur begrenzt löslichen organischen Phase in Kontakt gebracht wird. Im Entlackungsbad liegt die organische Phase also nicht als kontinuierliche Phase vor, sondern als in der alkalischen wässrigen Phase gelöste Organik. Bevorratet wird jedoch auch hier ein Zweiphasensystem aus dem die kontinuierliche wässrige Phase zur Entlackung ausgespeist wird, während die organische Phase im Systemtank verbleibt.

Gerade in der hochautomatisierten automobilen Fertigung ist es erforderlich, dass die in der Lackierstraße zum Einsatz kommenden Zerstäubungssysteme zur Lackapplikation schnell und effektiv von Lackresten befreit werden müssen. Dies gilt nicht nur bei vorübergehenden Produktionsstillstand und in Wartungsintervallen, um einer Verharzung der Applikationsgeräte vorzubeugen, sondern auch für den Fall, dass ein und derselbe Lackierroboter verschiedene Lackierarbeiten, beispielsweise Innen- und Außenlackierung, auch unter Verwendung unterschiedlicher Beschichtungsmittel, beispielsweise Füller, Basislack und Klarlack, durchführt und daher entsprechend zwischengereinigt werden muss. In dem Anwendungsfeld Lackierstraße wird also eine hohe Reinigungsleistung bei kurzer Reinigungsdauer oder Einwirkzeit abverlangt. Die DE 10 2008 027 997 A1 offenbart die in einer solchen Lackierstraße üblicherweise eingesetzten Rotationszerstäuber, für die im Rahmen der vorliegenden Erfindung ein geeignetes Verfahren zur Entlackung bereitgestellt ist. Weiterhin ist für die Reinigung der Applikationsvorrichtungen einer Lackierstraße von großer Bedeutung, dass die Reinigung nicht auf die Wirkung leicht flüchtiger organischer Komponenten beruht, da diese sowohl arbeits- als auch umwelthygienisch als kritisch einzustufen sind, jedoch unweigerlich bei der Reinigung der Applikationsvorrichtungen einer Lackierstraße in die Umgebungsluft übergehen.

Gegenüber dem Stand der Technik betreffend Reinigungsmittel zur Entlackung von insbesondere metallischen Oberflächen bestand also die Aufgabe ein Verfahren zu etablieren, dass eine schnelle effiziente Reinigung harter, mit unterschiedlichen Lacken versehener Oberflächen herbeiführt, ohne auf die Anwesenheit leicht flüchtiger organischer Lösemittel angewiesen zu sein, und das speziell für die Reinigung und Entlackung von Lackapplikationsvorrichtungen umfassend Zerstäuber und/oder Düse geeignet ist.

Diese Aufgabe wird gelöst durch ein Verfahren zum Abreinigung von Farben, Lacken und/oder Anstrichen auf Basis organischer Bindemittelsysteme von harten Oberflächen (="Entlacken"), bei dem eine wasserbasierte Reinigungsflüssigkeit mit der abzureinigenden harten Oberfläche in Kontakt gebracht wird, wobei die Reinigungsflüssigkeit neben Wasser, mindestens ein Amphiphil und ein Öl in einer Menge von weniger als 10 Gew.-% bezogen auf die Reinigungsflüssigkeit enthält und eine Mikroemulsion der zuvor genannten Komponenten umfasst.

Harte Oberfläche im Sinne der vorliegenden Erfindung sind alle von solchen Festkörpern gebildete Oberflächen, die nur aus solchen Werkstoffen gefertigt ist, die bei der Applikationstemperatur der Mikroemulsion ein Elastizitätsmodul von mindestens 2 GPa aufweisen.

Ein Amphiphil im Sinne der vorliegenden Erfindung ist eine Verbindung, die in der Lage ist, in Wasser Mizellen auszubilden, und der daher eine kritische Mizellbildungskonzentration in entionisiertem Wasser ($\kappa$ <1 $\mu$Scm$^{-1}$) bei 20 °C bestimmt als Unstetigkeit in der Konzentrationsabhängigkeit zumindest einer der folgenden intensiven physikalischen Größen ausgewählt aus Äquivalentleitfähigkeit, Brechungsindex, Oberflächenspannung und osmotischer Druck zugeordnet werden kann (siehe Kapitel 8.2 aus "Grenzflächen- und Kolloidchemie", H.-D. Dörfler, VCH-Verlag, 1994). Amphiphile sind ausgewählt aus Tensiden, vorzugweise nichtionischen Tensiden, Emulgatoren oder Phospholipiden.

Ein Öl im Sinne der vorliegenden Erfindung ist eine Flüssigkeit oder eine homogene Mischung von Flüssigkeiten mit einem Dampfdruck von weniger als 0,01 kPa und einer Wasserlöslichkeit von weniger als 0,2 Gramm pro Liter entionisiertem Wasser ($\kappa$ <1 $\mu$Scm$^{-1}$) jeweils bei 20 °C.

Eine Mikroemulsion im Sinne der vorliegenden Erfindung ist ein thermodynamisch stabiles flüssiges Mehrkomponentensystem enthaltend zumindest Wasser, das Öl und das mindestens eine Amphiphil. Im Rahmen der Erfindung ist eine Mikroemulsion definiert als eine bei einer definierten Temperatur und 1013 mbar sich spontan bildende transluzente Mischung eines Öls und einer wässrigen Phase. Dabei wird die Transluzenz bei 20°C und einer Wellenlänge von 860 nm im Streulichtverfahren mittels DIN ISO 7027 als Trübungswert (NTU) bestimmt. Es gilt ein Wert von kleiner als 50 als transluzent.

Nach Winsor können Mikroemulsionssysteme bestehend aus einer Wasserkomponente, einer Ölkomponente und einem Amphiphil gemäß ihrer Phasengleichgewichte in 4 Typen unterteilt werden.

Bei einem Mikroemulsionssystem vom Winsor Typ I ist das Amphiphil vor allem in Wasser und in einer O/W-Mikroemulsionsform löslich. Es besteht aus einer wässerigen Phase reich an Amphiphilen (O/W-Mikroemulsion) und einer überschüssigen, aber amphiphilarmen Ölphase.

Bei einem Mikroemulsionssystem vom Winsor Typ II ist das Amphiphil vor allem in einer Ölphase und in einer W/O-Mikroemulsionsform löslich. Sie besteht aus einer Ölphase reich an Amphiphilen (W/O-Mikroemulsion) und einer überschüssigen, aber amphiphilarmen wässerigen Phase.

Ein Mikroemulsionssystem vom Winsor Typ III stellt häufig eine bikontinuierliche Mikroemulsion dar, die auch Mittelphasen-Mikroemulsion genannt wird, aus einer mittleren Phase reich an Amphiphilen, welche mit einer amphiphilarmen wässerigen Phase wie auch einer amphiphilarmen Ölphase koexistiert.

Ein Mikroemulsionssystem vom Winsor Typ IV hingegen ist eine einphasige homogene Mischung und stellt im Gegensatz zu den Winsor Typen I bis III, die aus 2 oder 3 Phasen bestehen, von denen nur eine Phase eine Mikroemulsion darstellt, insgesamt eine Mikroemulsion dar.

Die Reinigungsflüssigkeit, die gemäß dem erfindungsgemäßen Verfahren verwendet wird, umfasst eine Mikroemulsion und zeichnet sich bei Vorliegen von Exzessphasen vorzugsweise zusätzlich dadurch aus, dass sie allein durch Erhöhung des Gehalts mindestens eines der enthaltenen Amphiphile unter isothermen Bedingungen in eine Mikroemulsion nach Winsor Typ IV umgewandelt werden kann, die optisch isotrop und transluzent ist.

Die Mikroemulsion verleiht der Reinigungsflüssigkeit eine niedrige Oberflächenspannung und begünstigt daher die Benetzung der von mit Lack versehenen harten Oberflächen. Es hat sich überraschenderweise gezeigt, dass eine gute Entlackung bereits mit solchen Reinigungsflüssigkeiten ermöglicht wird, deren Ölanteil unterhalb von 10 Gew.-% liegt, ohne dass zusätzlich auf flüchtige organische Verbindungen zur Solubilisierung von Lackbestandteilen zurückgegriffen werden muss. Dieser Vorteil kommt insbesondere dort zum Tragen, wo die Instandhaltung der Lackapplikationsgeräte und deren variable Einsatzweise im Vordergrund steht, also die schnelle Abreinigung kleiner Kompartimente innerhalb der Lackapplikationsgeräte selbst und weniger die großflächige Entlackung lackierter Bauteilen in komplexer Geometrie. In einer bevorzugten Ausführungsform des Verfahrens kommen Reinigungsflüssigkeiten zur Anwendung deren Ölanteil mindestens 0,5 Gew.-%, besonders bevorzugt mindestens 1 Gew.-% beträgt, um eine ausgesprochen gute Solubilisierung der organischen Bestandteile des Lackes zu ermöglichen.

Im erfindungsgemäßen Verfahren ist das Öl für die Aufgabe der Solubilisierung organischer Bestandteile der abzureinigenden Oberflächen vorzugsweise ausgewählt aus mindestens einem synthetischen Öl und/oder Mineralöl und/oder mindestens einem pflanzliches oder mindestens einem tierischen Öl und/oder mindestens einem aliphatischen Ester, aliphatischen Ether oder aliphatischen Aldehyd mit jeweils mindestens 7 Kohlenstoffatomen im aliphatischen Rest.

Für die Ausbildung von Mikroemulsionen nach Winsor Typ IV bei vergleichsweise niedriger Phasenübergangstemperatur und geringem Amphiphilengehalt sind wiederum aus gesättigten Aliphaten bestehende Paraffinöle (= "Weißöle") bevorzugt, die entweder als Destillationsprodukt aus natürlichen Rohstoffen wie Erdölen, Braun- und Steinkohlen, Holz und Torf gewonnen werden oder aus Synthesegas mittels Fischer-Tropsch-Synthese zugänglich sind. Vorzugsweise handelt es sich bei den erfindungsgemäß einsetzbaren Weißölen um Flüssigkeiten mit einer Dichte von weniger als 850 kg/m$^3$ bei 15 °C und einem Verdampfungsverlust von vorzugsweise weniger als 2 Gew.-% nach ASTM D972 bei 107 °C über 22 Stunden. Derartige Weißöle liegen wiederum bevorzugt als Mischung von im wesentlichen gesättigten Kohlenwasserstoffen vor, die einen Anteil von bis zu 20 Gew.-% an cyclischen Kohlenwasserstoffen aufweisen können, und besitzen daher vorzugsweise einen Anilinpunkt nach DIN ISO 2977 von mindestens 80 °C, besonders bevorzugt von mindestens 100 °C, wobei der Anteil an ungesättigten Kohlenwasserstoffen vorzugsweise geringer ist als 2 Gew.-%, besonders bevorzugt geringer ist als 1 Gew.-% bezogen auf das Weißöl bestimmt nach ASTM D2007. Weiterhin bevorzugt sind Weißöle deren Gewichtsanteil an unverzweigten gesättigten Kohlenwasserstoffen bei nicht mehr als 1 Gew.-% bezogen auf das Weißöl beträgt. Reinigungsflüssigkeiten enthaltend die zuvor beschriebenen Weißöle stellen Mikroemulsionen mit relativ niedrigem Amphiphilen-Gehalt zur Verfügung und sind daher aus wirtschaftlichen Gründen bevorzugt.

Bevorzugte pflanzliche oder tierische Öle sind Triglyceride gesättigter oder ungesättigter Fettsäuren, vorzugsweise gesättigter Fettsäuren, beispielsweise die Triester der Stearin- oder der Palmitinsäure oder hydriertes Rizinusöl.

Bevorzugte aliphatische Ester sind die C5-C10 Alkylester der C5-C10 Alkancarbonsäuren, besonders bevorzugt Octyloctanoat.

Bevorzugte aliphatische Ether sind symmetrische Ether von gesättigten Aliphaten mit mindestens 6 Kohlenstoffatomen, besonders bevorzugt Dioctylether.

Bevorzugte aliphatische Aldehyde sind die Hydroformylierungsprodukte einfach ungesättigter Olefine mit mindestens 8 Kohlenstoffatomen, die kommerziell erhältlich sind als Oxoöl® 9N (Fa. BASF SE).

Im Rahmen der Erfindung können generell auch Silikonöle zur Bereitstellung der Ölphase eingesetzt werden, insbesondere auf Basis von Siloxan-Polymeren der allgemeinen Summenformel $X[R^1R^2SiO]_nY$ mit $R^1$ und $R^2$ als gesättigten oder ungesättigten aliphatischen Resten mit nicht mehr als 8 Kohlenstoffatomen, der natürlichen Zahl n von größer als 5 und den Resten X und Y, die jeweils unabhängig voneinander Wasserstoff, ein Halogen-Atom oder ein Rest $R^1$ sein können. Jedoch ist die Verwendung der Silikonöle wegen ihrer hohen Oberflächenaffinität, insbesondere in Lackapplikationsvorrichtungen für ein konstantes Sprühbild und einen homogenen Lackauftrag kritisch und daher nicht bevorzugt.

Erfindungsgemäß bevorzugt ist hinsichtlich der Auswahl der Amphiphilen, dass das mindestens eine Amphiphil der Reinigungsflüssigkeit ausgewählt ist aus Tensiden, besonders bevorzugt aus nichtionischen Tensiden, insbesondere bevorzugt aus nichtionischen Tensiden die einen HLB-Wert nach Griffin von mehr als 8, jedoch bevorzugt von weniger als 14 aufweisen.

Der HLB-Wert nach Griffin ist eine empirische Größe und berechnet sich wie folgt: $HLB = 20 \cdot (1-M_L/M)$ mit $M_L$: Molmasse der lypophilen Gruppe des Niotensids; M: Molmasse des Niotensids

In einer besonders bevorzugten Ausführungsform enthält die Reinigungsflüssigkeit ein nicht-ionisches Tensid ausgewählt aus gesättigten oder ungesättigten, vorzugsweise gesättigten, alkoxylierten Alkylalkoholen, die wiederum vorzugsweise zumindest 8, jedoch bevorzugt nicht mehr als 14 Kohlenstoffatome im Alkylalkohol aufweisen, und besonders bevorzugt einen HLB-Wert nach Griffin von mehr als 8, jedoch bevorzugt von weniger als 14 aufweisen.

Weiterhin ist es aus Gründen der wirtschaftlichen Verfügbarkeit bevorzugt, dass die Alkylalkohole ethoxyliert und/oder propoxyliert vorliegen. Zur Vermeidung einer starken Schaumbildung speziell bei der Reinigung von Lackapplikationsgeräten, bei der selbiges üblicherweise mit der Reinigungsflüssigkeit beschickt und durch den Zerstäuber bzw. die Düse des Gerätes wieder austritt, ist bevorzugt, wenn die alkoxylierten Alkylalkohole zumindest teilweise mit einer Alkylgruppe mit vorzugsweise nicht mehr als 6 Kohlenstoffatomen endgruppenverschlossen vorliegen.

Üblicherweise kann mit den zuvor genannten Amphiphilen und Ölen eine Reinigungsflüssigkeit formuliert werden, die die der Erfindung zugrundeliegende Aufgabe löst, wobei zur Bereitstellung einer Mikroemulsion, sei es als isolierte Phase oder als einzige Phase der Reinigungsflüssigkeit, es vorteilhaft ist, wenn der Gehalt an Amphiphilen im Verhältnis zum Ölgehalt in einem bestimmten Verhältnis liegt. Bevorzugt sind in diesem Zusammenhang erfindungsgemäße Verfahren, bei denen die Reinigungsflüssigkeit ein Gewichtsverhältnis von Amphiphilen zu Öl im Bereich von 2 : 1 bis 1 : 4, besonders bevorzugt im Bereich von 1 : 1 bis 1 : 3 aufweist.

Für eine optimal wirtschaftliche Verfahrensführung und niedrigviskose Reinigungsflüssigkeiten ist es vorteilhaft, wenn der Anteil an Amphiphilen der erforderlich ist, um die Ölphase in der Wasserphase vollständig zu emulgieren und eine Mikroemulsion auszubilden möglichst gering ist. Demgemäß sind erfindungsgemäße Verfahren bevorzugt, bei denen die Reinigungsflüssigkeit einen Fischschwanzpunkt aufweist, der bei einem Gesamtgehalt an Amphiphilen von nicht mehr als 10 Gew.-%, besonders bevorzugt nicht mehr als 5 Gew.-%, besonders bevorzugt nicht mehr 3 Gew.-% liegt.

Unter "Fischschwanzpunkt", wie hierin verwendet, ist die maximale Ausdehnung des einphasigen, optisch isotropen Mikroemulsionsbereiches bei vorgegebenen Mengenverhältnis Öl : Wasser im Gibbs Zustandsdiagramm der Reinigungsflüssigkeit hin zu minimalem Amphiphilengehalt zu verstehen, an welchem sich die obere und untere Phasengrenze schneiden, die selbiges Einphasengebiet begrenzen. Das Gibbs-Zustandsdiagramm geht dabei aus dem Gibbs-Zustandsprisma des ternären Systems der Reinigungsflüssigkeit, das durch Wasser-, Öl- und Amphiphilengehalt aufgespannt wird, als senkrechter Schnitt durch das Prisma mit der Temperatur als Ordinate bei konstantem Mengenverhältnis Öl : Wasser hervor. Die Wasser- und Öl-Phase des ternären Systems der Reinigungsflüssigkeit umfassen sämtliche darin gelösten Verbindungen, die keine Amphiphilen darstellen. "Obere Phasengrenze" und "untere Phasengrenze" beschreiben dabei vorzugsweise die Übergänge zwischen Mikroemulsionsphase (einphasige Mikroemulsionen vom Winsor IV Typ) und ausgeschiedenen Exzessphasen (zweiphasige Mikroemulsionen vom Winsor I oder II Typ)

oder anderen strukturierten Phasen. Der Fischschwanzpunkt ist bei vorgegebenem Mengenverhältnis Öl : Wasser durch den Amphiphilengehalt und einer charakteristischen Temperatur (im folgenden "Fischschwanztemperatur") definiert, die bei gleicher Krümmung der oberen und unteren Phasengrenze im Dreiphasengebiet des Gibbs-Zustandsdiagramms, der sogenannten mittleren Temperatur entspricht.

Die im folgenden beschriebene Methodik zur Bestimmung des Fischschwanzpunktes bezieht sich auf das der Reinigungsflüssigkeit zugrundeliegende ternäre System umfassend Wasser, Öl und Amphiphile. Methodisch wird der Fischschwanzpunkt als Schnittpunkt der Phasengrenzen temperaturabhängig bestimmt, wobei bei Verwendung einer Mischung an Amphiphilen das Mischungsverhältnis der Amphiphile konstant gehalten wird. Der Schnittpunkt beider Phasengrenzen wird jeweils isoplethal ausgehend von einem einphasigen System vom Winsor IV Typ und hohen Amphiphilengehalt durch Variation der Temperatur und dann stufenweiser Verdünnung mit konstantem Mengenverhältnis Öl : Wasser, wobei bei Anwesenheit weiterer Komponenten, die keine Amphiphile darstellen, deren Anteil ebenfalls konstant gehalten wird, und erneuter Bestimmung der Phasengrenzen durch Variation der Temperatur in einem Bereich von 0 bis 95°C bestimmt. Dabei muss nach jeder Temperaturanpassung die Gleichgewichtseinstellung der zu untersuchenden Reinigungsflüssigkeit stattfinden. Die zu den jeweiligen Phasenübergangspunkte gehörenden Temperaturen werden als Funktion der Gesamtkonzentration der Amphiphile bei gegebenem Mengenverhältnis Öl : Wasser graphisch aufgetragen (Ordinate: Temperatur; Abszisse: Amphiphilkonzentration) und der Fischschwanzpunkt des der Reinigungsflüssigkeit zugrundeliegenden ternären Systems als Schnittpunkt der Tangenten zur oberen und unteren Phasengrenze graphisch ermittelt, aus dem sodann die Fischschwanztemperatur unmittelbar hervorgeht, wobei die Tangenten an Phasenübergangspunkte gleichen Amphiphilengehalts zu legen sind, die zudem nicht mehr als 5 Kelvin voneinander getrennt vorliegen dürfen. Ist dies nicht der Fall oder der graphisch ermittelte Amphiphilengehalt am Fischschwanzpunkt mehr als 10% von den zuvor genannten Phasenübergangspunkten entfernt, so ist zumindest eine weitere Bestimmung der Phasenübergangspunkte bei niedrigeren Amphiphilengehalt durchzuführen. In der Abbildung 1 ist ein experimentell bestimmter Schnitt durch das Gibbs-Phasenprisma für das Mehrkomponentensystem Wasser, Risella® X 415 (Fa. Shell International B.V.), Lutensol® XP 50 (Fa BASF SE) bei einem Mengenverhältnis Öl : Wasser von 0,03 dargestellt, dass die Temperaturen der Phasenübergangspunkte bei jeweils vorgegebenen Amphiphilengehalt wiedergibt. In der Abbildung 1 ist die graphische Bestimmung eines Fischschwanzpunktes als Schnittpunkt S der Tangenten an die obere To und untere Phasenübergangstemperatur Tu verdeutlicht. Für die zur Abbildung 1 zugrundegelegte Reinigungsflüssigkeit ergibt sich für den Fischschwanzpunkt S ein Amphiphilengehalt As von 3,7 Gew.-% und eine Fischschwanztemperatur Ts von 36°C.

Reinigungsflüssigkeiten lassen sich dann zur Entlackung von harten Oberflächen wirtschaftlich sinnvoll einsetzen, wenn deren Fischschwanztemperatur, bei der durch Zugabe geringer Mengen des Amphiphils ein Übergang zu einer isotropen Mikroemulsion vom Winsor-Typ IV vollzogen wird, verfahrenstechnisch gut eingestellt und keine übermäßige Wärmezuführung erfordert. Insofern sind erfindungsgemäße Verfahren bevorzugt, bei denen Reinigungsflüssigkeiten eingesetzt werden, deren Fischschwanztemperatur im Bereich von mehr als 10 bis 50 °C, vorzugsweise im Bereich von mehr als 20 bis 45 °C liegt.

Besonders niedrige Oberflächenspannungen bei gleichzeitig geringer Viskosität der Reinigungsflüssigkeit resultieren im Bereich des Fischschwanzpunktes der Reinigungsflüssigkeit. Günstig ist zudem, wenn die Reinigungsflüssigkeit im erfindungsgemäßen Verfahren als Winsor-Typ I oder IV und damit nahezu vollständig oder tatsächlich vollständig als Mikroemulsion vorliegt, um eine maximale Entlackungsleistung zu gewährleisten. Dementsprechend bevorzugt ist ein erfindungsgemäßes Verfahren, bei dem die Reinigungsflüssigkeit entweder eine Mikroemulsion vom Winsor Typ I oder vom Winsor Typ IV umfasst und/oder bei dem die Reinigungsflüssigkeit ein Gewichtsverhältnis von Gesamtgehalt an Amphiphilen zum Amphiphilengehalt am Fischschwanzpunkt der Reinigungsflüssigkeit oberhalb von 3 : 5, besonders bevorzugt oberhalb von 1 : 1 aufweist, jedoch der Gesamtgehalt an Amphiphilen insbesondere bevorzugt keine Werte überschreitet, für die die Viskosität der Reinigungsflüssigkeit bei der Fischschwanztemperatur gemessen mit koaxialen Zylindern und Couette-System bei einer Schergeschwindigkeit von 10 $s^{-1}$ größer als 1 Pa·s ist, vorzugsweise größer als 0,1 Pa·s ist.

In diesem Zusammenhang ist in analoger Weise bevorzugt, wenn die Reinigungsflüssigkeit als solche in einem Temperaturbereich von 10 bis 50 °C, besonders bevorzugt in einem Temperaturbereich von 15 bis 40 °C, ganz besonders bevorzugt in einem Temperaturbereich von 20 bis 35 °C eine Mikroemulsion vom Winsor-Typ IV bildet, wobei das Temperaturintervall, innerhalb dessen eine solche Mikroemulsion vorliegt, vorzugsweise zumindest 5 K, besonders bevorzugt zumindest 10 K, ganz besonders bevorzugt zumindest 15 K breit ist.

Weiterhin kann die Reinigungsflüssigkeit vorteilhafte Zusätze enthalten wie beispielsweise Co-Tenside zur Verbreiterung der Stabilitätsbereiche der Winsor-Typ IV Bereiches oder alkalisch reagierende Verbindungen zur verbesserten Solubilisierung organischer Bindemittelbestandteile. Die Zusätze können auch in Kombination in der Reinigungsflüssigkeit zugegen sein.

In einem bevorzugten Verfahren enthält die Reinigungsflüssigkeit zusätzlich Aniontenside als Co-Tenside, vorzugsweise zusätzlich zu mindestens einem nichtionischen Tensid mit einem HLB-Wert im Bereich von mehr als 8 bis weniger als 14, wobei die Aniontenside wiederum vorzugsweise ausgewählt sind aus C9-C15-Alkylbenzolsulfonaten,

C10-C20-Alkylethersulfaten mit 2 bis 10 Einheiten Alkylenoxid und/oder Dialkylsulfosuccinaten der Formel (I),

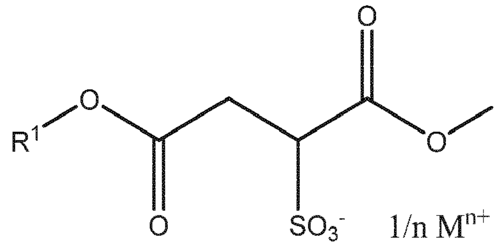

(I)

wobei die Reste $R^1$ und $R^2$ jeweils unabhängig voneinander linear oder verzweigt sind und 6 bis 22 Kohlenstoffatome, vorzugsweise 6 bis 12 Kohlenstoffatome, enthalten und besonders bevorzugt ausgewählt werden aus 1-Hexyl, 3,5,5-Trimethyl-1-Hexyl, 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl, und 1/n $M^{n+}$ ein Äquivalent eines n-wertigen Kations ist.

In einem anderen bevorzugten Verfahren enthält die Reinigungsflüssigkeit zusätzlich alkalisch reagierende Substanzen ausgewählt aus Alkalien und/oder Alkanolaminen mit einem Dampfdruck bei 20 °C von weniger als 0,01 kPa, die wiederum vorzugsweise ausgewählt sind aus Triethanolamin, N,N-Dimethylaminoethanol und/oder N-Methyldiethanolamin, wobei der Anteil an solchen Alkanolaminen vorzugsweise kleiner als 1 Gew.-%, jedoch bevorzugt zumindest 0,1 Gew.-% beträgt.

Insgesamt zeichnet sich das erfindungsgemäße Verfahren dadurch aus, dass die Reinigungsflüssigkeit ohne den Zusatz von flüchtigen organischen Verbindungen formuliert werden kann, so dass eine nahezu vollständig auf Wasser basierte Entlackung durchgeführt werden kann, bei der Immissionen in die Arbeitsumgebung nicht auftreten. In einer bevorzugten Ausführungsform des erfindungsgemäßen Verfahrens enthält die Reinigungsflüssigkeit daher weniger als 5 Gew.-%, besonders bevorzugt weniger als 1 Gew.-%, insbesondere bevorzugt weniger als 0,2 Gew.-% an solchen organischen Verbindungen, die keine Amphiphile darstellen, und einen Dampfdruck bei 20 °C von mindestens 0,01 kPa aufweisen.

Das In-Kontakt-Bringen der Reinigungsflüssigkeit mit der harten Oberfläche erfolgt im erfindungsgemäßem Verfahren vorzugsweise bei einer Temperatur (="Applikationstemperatur"), die unterhalb der Fischschwanztemperatur der Reinigungsflüssigkeit liegt, welche wiederum bevorzugt im Bereich von 10 bis 50 °C, ganz besonders bevorzugt im Bereich von 15 bis 40 °C liegt.

Die Art des In-Kontakt-Bringens ist erfindungsgemäß nicht auf bestimmte verfahrenstechnische Arten festgelegt, jedoch existiert für jedes Bauteil eine bevorzugte Applikation der Reinigungsflüssigkeit. So können flächige abzureinigende Bauteile bevorzugt durch Aufsprühen oder Eintauchen in die Reinigungsflüssigkeit entlackt werden, während die Reinigung von Lackierapplikationsgeräten beispielsweise einer Lackierstrasse es erfordert, dass die Applikationsgeräte, wie zuvor mit dem Lack, zur Reinigung mit der Reinigungsflüssigkeit beschickt werden. Grundsätzlich von Vorteil ist jedoch, dass die abzureinigende Oberfläche von der Reinigungsflüssigkeit angeströmt wird.

In einer bevorzugten Ausführungsform des erfindungsgemäßen Verfahrens, beispielsweise auch für die Reinigung von Lackapplikationsgeräten wie Sprühköpfen, erfolgt das In-Kontakt-Bringen der Reinigungsflüssigkeit mit der abzureinigenden harten Oberfläche derart, dass selbige von der Reinigungsflüssigkeit angeströmt wird, vorzugsweise wiederum derart, dass die Strömung im Wesentlichen tangential zur abzureinigenden harten Oberfläche erfolgt, besonders bevorzugt mit einer Schergeschwindigkeit von mindestens einer reziproken Sekunde, insbesondere bevorzugt mit einer Schergeschwindigkeit von mindestens 10 reziproken Sekunden. Im erfindungsgemäßen Verfahren werden vorzugsweise Bauteile und Vorrichtungen derart abgereinigt, dass die Strömung der Reinigungsflüssigkeit in den Bereichen, in denen die für die Strömung charakteristische Länge (Spaltbreite, Rohrradius) des Bauteils minimal ist, eine Reynoldszahl von mindestens 10 vorliegt, wobei die Reynoldszahl (Re) wie folgt definiert ist:

$$Re = \frac{\rho \cdot l \cdot v}{\eta}$$

p: Dichte der Reinigungsflüssigkeit [$10^3 \cdot kg \cdot m^{-3}$]

η: dynamische Viskosität [Pa·s]

l: charakteristische Länge in [m]

v: Strömungsgeschwindigkeit [$m \cdot s^{-1}$]

Hierzu wird regelmäßig die Strömungsgeschwindigkeit anzupassen sein und bei Sprühköpfen von Lackapplikationsgräten speziell die Durchflussmenge der Reinigungsflüssigkeit.

Die abzureinigenden harten Oberflächen sollten bevorzugt von einem Bauteil stammen, das mindestens eine metallische Oberfläche aufweist, die mit Farben, Lacken und/oder Anstrichen auf Basis organischer Bindemittelsysteme versehen ist, wobei das Bauteil vorzugsweise ausgewählt ist aus einer Lackapplikationsvorrichtung umfassend Lackzuführung, Zerstäuber und/oder Düse. In einer besonders bevorzugten Ausprägung werden im erfindungsgemäßen Verfahren solche Lackapplikationsvorrichtungen gereinigt, die aus einem Rotationszerstäuber mit einem drehbar gelagerten Glockenteller zur Zerstäubung und zur Abgabe eines Sprühstrahls des Lackes bestehen, wobei der Glockenteller vorzugsweise aus dem Werkstoff Aluminium oder Titan bzw. deren Legierungen, die als Hauptbestandteil in Atomprozent entweder Aluminium oder Titan enthalten, gefertigt ist.

In einem weiteren Aspekt betrifft die vorliegende Erfindung auch eine im zuvor beschriebenen Verfahren zur Entlackung besonders geeignete Reinigungsflüssigkeit enthaltend neben Wasser und einer alkalisch reagierenden Substanz ausgewählt aus Alkalien und/oder Alkanolaminen mit einem Dampfdruck bei 20 °C von weniger als 0,01 kPa,

(i) mindestens 1 Gew.-%, aber weniger als 10 Gew.-% eines nichtionischen Tensides ausgewählt aus gesättigten und alkoxylierten Alkylalkoholen, die ggf. zumindest teilweise mit einer Alkyl-Gruppe mit nicht mehr als 6 Kohlenstoffatomen endgruppenverschlossen vorliegen können, mit einem HLB-Wert von mehr als 8 und weniger als 14 sowie

(ii) mindestens 1 Gew.-%, aber weniger als 10 Gew.-% eines Weißöls mit einer Dichte von weniger als 850 $kg/m^3$ bei 15 °C,

(iii) weniger als 1 Gew.-% an Amphiphilen, die kein Amphiphil gemäß Komponente (i) darstellen,

(iv) weniger als 1 Gew.-%, an solchen organischen Verbindungen, die keine Amphiphile darstellen und einen Dampfdruck bei 20 °C von mindestens 0,01 kPa aufweisen,

(v) weniger als 1 Gew.-% an wasserunlöslichen organischen Flüssigkeiten, die kein Weißöl gemäß Komponente (ii) sind und einen Dampfdruck bei 20 °C von weniger als 0,01 kPa aufweisen,

wobei das Gewichtsverhältnis der Komponente (i) in der Reinigungsflüssigkeit bezogen auf den Anteil der Komponente (i) am Fischschwanzpunkt der Reinigungsflüssigkeit oberhalb von 3 : 5, vorzugsweise oberhalb von 1 : 1 liegt.

Die im Rahmen des erfindungsgemäßen Verfahrens als bevorzugt herausgestellten Ausführungsformen umfassend Konkretisierungen hinsichtlich Art und Menge der alkalisch reagierenden Substanz sowie hinsichtlich der Art, Menge und Mengenverhältnisse der Komponenten (i), (ii) und hinsichtlich des Phasenverhaltens der Reinigungsflüssigkeit, insbesondere des Fischschwanzpunktes, sind ebenso im Rahmen der erfindungsgemäßen Reinigungsflüssigkeit bevorzugt.

Ausführungsbeispiele:

Zur Bewertung der Entlackungsleistung verschiedener Reinigungsflüssigkeiten wurden zunächst entfettete Titanbleche (unlegiert, Dicke 1 mm, 10 x 10 cm) gewogen und anschließend lackiert. Die Lackierung der Titanbleche erfolgte jeweils mit einem Spincoater. Dabei wurden die Bleche mit 2,8 ml des jeweiligen Lackes innerhalb von 5 Sekunden unter konstant steigender Drehzahl bis zum Erreichen einer Drehzahl von 500 rpm beaufschlagt, unmittelbar danach wurde die Drehzahl auf 1500 rpm erhöht und diese für 55 Sekunden beibehalten. Anschließend wurden das jeweilige Blech aus dem Spincoater entnommen und entsprechend der Angaben des Lackherstellers getrocknet. Das Ende der Trocknung ist jeweils nach Eintreten der Gewichtskonstanz des lackierten Titanbleches zwischen zwei Wägevorgängen angezeigt. Das Gesamtgewicht nach dem Eintreten der Gewichtskonstanz dient der Bestimmung des Trockenlackauflage und der Entlackungsleistung wie im Folgenden dokumentiert ist. Die Reinigung der Bleche wurde für den jeweiligen Lack mit einem vorgegebenen Volumen der Reinigungsflüssigkeit durchgeführt. Das Reinigervolumen wurde wiederum im Spincoater bei einer Umdrehungsgeschwindigkeit von 3000 rpm durch Auftropfen auf die lackierten Titanbleche bei einer Temperatur von 22 °C aufgetragen. Nach dem letzten Tropfen wird die zuvor eingestellte Drehzahl für zumindest 10 Sekunden beibehalten und das derart gereinigte lackierte Titanblech entnommen, im Stickstoffstrom trocken geblasen und gewogen. Die Gewichtsdifferenz zum lackierten Titanblech entsprach der Menge an abgereinigten Lack und das prozentuale Verhältnis von abgereinigten Lack zur Trockenlackauflage entspricht der jeweiligen Entlackungsleistung, die in der Tabelle 1 angegeben ist.

Es zeigte sich, dass sämtliche Reinigungsflüssigkeiten, die aus einem Weißöl und einem Niotensid bestehen und eine Mikroemulsion umfassen, eine Entlackungsleistung aufweisen, die mit derjenigen des tensidhaltigen, alkalischen Referenzreinigers (VB) auf der Basis von Monoethanolamin identisch ist. Zufriedenstellende Ergebnisse konnten auch mit Reinigungsflüssigkeiten enthaltend ein Öl auf Basis eines Hydroformylierungsproduktes von isomeren Oktenen (ME2) sowie des Esters Octyloctanoat (ME3) erzielt werden.

Tab. 1

Entlackungsleistung verschiedener Reiniger in Prozent bezogen auf die Trockenlackauflage der beschichteten Titan-Bleche

| Reinigerbezeichnung | Deep Black | Füller Black | Rapsgelb |
|---|---|---|---|
| VB | 60 | 54 | 71 |
| ME1-1,0% | 69 | 54 | 71 |
| ME1-0,9% | 68 | 55 | 73 |
| ME1-0,8% | 69 | 48 | 68 |
| ME2-1,3% | 54 | 38 | 57 |
| ME3-1,5% | 67 | 42 | 50 |

VB: BONDERITE® C-MC 302 (Fa. Henkel AG & Co. KGaA) als 2 Gew.-%ige wässrige Lösung

ME1: 0,4 Gew.-% Risella® X 415 (Fa. Shell International B.V.)

ME2: 0,5 Gew.-% Oxoöl 9 N (Fa. BASF SE)

ME3: 0,5 Gew.-% Octyloctanoat

jeweils in entionisiertem Wasser ($\kappa < 1 \mu Scm^{-1}$) mit 0,4 Gew.-% an Triethanolamin und der in der Reinigerbezeichnung jeweils angegebenen Menge an Lutensol® XP 50 (Fa. BASF SE)

## Patentansprüche

1. Verfahren zum Abreinigung von Farben, Lacken und/oder Anstrichen auf Basis organischer Bindemittelsysteme von harten Oberflächen, bei dem eine wasserbasierte Reinigungsflüssigkeit mit der abzureinigenden harten Oberfläche in Kontakt gebracht wird, wobei die Reinigungsflüssigkeit neben Wasser, mindestens ein Amphiphil und ein Öl in einer Menge von weniger als 10 Gew.-% bezogen auf die Reinigungsflüssigkeit enthält und eine Mikroemulsion der zuvor genannten Komponenten umfasst.

2. Verfahren nach Anspruch 1, **dadurch gekennzeichnet, dass** das Öl mindestens ein Mineralöl, pflanzliches oder tierisches Öl und/oder aliphatische Ester, Ether und Aldehyde, die im aliphatischen Rest zumindest 7 Kohlenstoffatome aufweisen, enthält.

3. Verfahren nach einem oder beiden der vorherigen Ansprüche, **dadurch gekennzeichnet, dass** das mindestens eine Amphiphil der Reinigungsflüssigkeit ausgewählt ist aus Tensiden, vorzugsweise aus nichtionischen Tensiden, besonders bevorzugt aus nichtionischen Tensiden ausgewählt aus gesättigten oder alkoxylierten Alkylalkoholen, die vorzugsweise zumindest 8, jedoch bevorzugt nicht mehr als 14 Kohlenstoffatome im Alkylalkohol aufweisen, und besonders bevorzugt einen HLB-Wert nach Griffin von mehr als 8, jedoch bevorzugt von weniger als 14 aufweisen.

4. Verfahren nach Anspruch 3, **dadurch gekennzeichnet, dass** die Alkylalkohole ethoxyliert und/oder propoxyliert und optional teilweise mit einer Alkylgruppe mit vorzugsweise nicht mehr als 6 Kohlenstoffatomen endgruppenverschlossen vorliegen.

5. Verfahren nach einem oder mehreren der vorherigen Ansprüche, **dadurch gekennzeichnet, dass** der Fischschwanzpunkt der Reinigungsflüssigkeit bei einem Gesamtgehalt an Amphiphilen von nicht mehr als 10 Gew.-%, besonders bevorzugt nicht mehr als 5 Gew.-%, besonders bevorzugt nicht mehr 3 Gew.-% liegt.

6. Verfahren nach einem oder mehreren der vorherigen Ansprüche, **dadurch gekennzeichnet, dass** die Reinigungsflüssigkeit ein Gewichtsverhältnis von Gesamtgehalt an Amphiphilen zum Amphiphilengehalt am Fischschwanzpunkt oberhalb von 3 : 5, vorzugsweise oberhalb von 1 : 1 aufweist, jedoch der Gesamtgehalt an Amphiphilen vorzugsweise keine Werte überschreitet, für die die Viskosität der Reinigungsflüssigkeit bei der Fischschwanztemperatur gemessen mit koaxialen Zylindern und Couette-System bei einer Schergeschwindigkeit von 10 $s^{-1}$ nicht größer als 1000 mPas ist, besonders bevorzugt nicht größer als 100 mPas ist.

**7.** Verfahren nach einem oder mehreren der vorherigen Ansprüche, **dadurch gekennzeichnet, dass** die Reinigungsflüssigkeit eine Fischschwanztemperatur im Bereich von mehr als 10 bis 50 °C, vorzugsweise im Bereich von mehr als 20 bis 45 °C aufweist.

**8.** Verfahren nach einem oder mehreren der vorherigen Ansprüche, **dadurch gekennzeichnet, dass** die Reinigungsflüssigkeit in einem Temperaturbereich von 10 bis 50 °C, vorzugsweise in einem Temperaturbereich von 15 bis 40 °C eine Mikroemulsion vom Winsor-Typ IV ausbildet, wobei das Temperaturintervall, innerhalb dessen eine solche Mikroemulsion vorliegt, vorzugsweise zumindest 5 K, besonders bevorzugt zumindest 10 K, ganz besonders bevorzugt zumindest 15 K breit ist.

**9.** Verfahren nach einem oder mehreren der vorherigen Ansprüche, **dadurch gekennzeichnet, dass** die Reinigungsflüssigkeit ein Gewichtsverhältnis von Amphiphilen zu Öl im Bereich von 2:1 bis 1:4, vorzugsweise im Bereich von 1 : 1 bis 1 : 3 aufweist.

**10.** Verfahren nach einem oder mehreren der vorherigen Ansprüche, **dadurch gekennzeichnet, dass** die Reinigungsflüssigkeit zusätzlich Aniontenside enthält, die vorzugsweise ausgewählt sind aus C9-C15-Alkylbenzolsulfonaten, C10-C20-Alkylethersulfate mit 2 bis 10 Einheiten Alkylenoxid, und/oder Dialkylsulfosuccinaten der Formel (I),

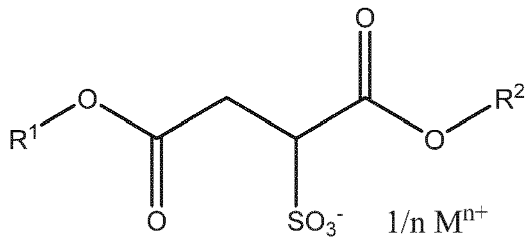

(I)

wobei die Reste $R^1$ und $R^2$ jeweils unabhängig voneinander linear oder verzweigt sind und 6 bis 22 Kohlenstoffatome, vorzugsweise 6 bis 12 Kohlenstoffatome, enthalten und besonders bevorzugt ausgewählt werden aus 1-Hexyl, 3,5,5-Trimethyl-1-Hexyl, 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl, und $1/n\ M^{n+}$ ein Äquivalent eines n-wertigen Kations ist.

**11.** Verfahren nach einem oder mehreren der vorherigen Ansprüche, **dadurch gekennzeichnet, dass** die Reinigungsflüssigkeit weniger als 5 Gew.-%, besonders bevorzugt weniger als 1 Gew.-%, an solchen organischen Verbindungen enthält, die keine Amphiphile darstellen, und einen Dampfdruck bei 20 °C von mindestens 0,01 kPa aufweisen.

**12.** Verfahren nach einem oder mehreren der vorherigen Ansprüche, **dadurch gekennzeichnet, dass** die Reinigungsflüssigkeit entweder eine Mikroemulsion vom Winsor Typ I oder vom Winsor Typ IV umfasst.

**13.** Verfahren nach einem oder mehreren der vorherigen Ansprüche, **dadurch gekennzeichnet, dass** das in-Kontakt-Bringen der Reinigungsflüssigkeit mit der abzureinigenden harten Oberfläche derart erfolgt, dass die abzureinigende Oberfläche von der Reinigungsflüssigkeit angeströmt wird, vorzugsweise derart, dass die Strömung im Wesentlichen tangential zur abzureinigenden harten Oberfläche erfolgt, besonders bevorzugt mit einer Schergeschwindigkeit von mindestens einer reziproken Sekunde, insbesondere bevorzugt mit einer Schergeschwindigkeit von mindestens 10 reziproken Sekunden.

**14.** Verfahren nach einem oder mehreren der vorherigen Ansprüche, **dadurch gekennzeichnet, dass** die abzureinigenden harten Oberflächen von einem Bauteil stammen, das mindestens eine metallische Oberfläche aufweist, die mit Farben, Lacken und/oder Anstrichen auf Basis organischer Bindemittelsysteme versehen ist, und das Bauteil vorzugsweise ausgewählt ist aus einer Lackapplikationsvorrichtung umfassend Zerstäuber und/oder Düse.

**15.** Reinigungsflüssigkeit enthaltend neben Wasser und einer alkalisch reagierenden Substanz ausgewählt aus Alkalien und/oder Alkanolaminen mit einem Dampfdruck bei 20 °C von weniger als 0,01 kPa,

(i) mindestens 1 Gew.-%, aber weniger als 10 Gew.-% eines nichtionischen Tensides ausgewählt aus gesättigten und alkoxylierten Alkylalkoholen, die ggf. zumindest teilweise mit einer Alkyl-Gruppe mit nicht mehr als 6 Kohlenstoffatomen endgruppenverschlossen vorliegen können, mit einem HLB-Wert von mehr als 8 und weniger

als 14 sowie
(ii) mindestens 1 Gew.-%, aber weniger als 10 Gew.-% eines Weißöls mit einer Dichte von weniger als 850 $kg/m^3$ bei 15 °C,
(iii) weniger als 1 Gew.-% an Amphiphilen, die kein Amphiphil gemäß Komponente (i) darstellen,
(iv) weniger als 5 Gew.-%, vorzugsweise weniger als 1 Gew.-%, besonders bevorzugt weniger als 0,2 Gew.-% an solchen organischen Verbindungen, die keine Amphiphile darstellen und einen Dampfdruck bei 20 °C von mindestens 0,01 kPa aufweisen,
(v) weniger als 1 Gew.-% an wasserunlöslichen organischen Flüssigkeiten, die kein Weißöl gemäß Komponente (ii) sind und einen Dampfdruck bei 20 °C von weniger als 0,01 kPa aufweisen,

wobei das Gewichtsverhältnis der Komponente (i) in der Reinigungsflüssigkeit bezogen auf den Anteil der Komponente (i) am Fischschwanzpunkt der Reinigungsflüssigkeit oberhalb von 3 : 5, vorzugsweise oberhalb von 1 : 1 liegt.

Abbildung 1

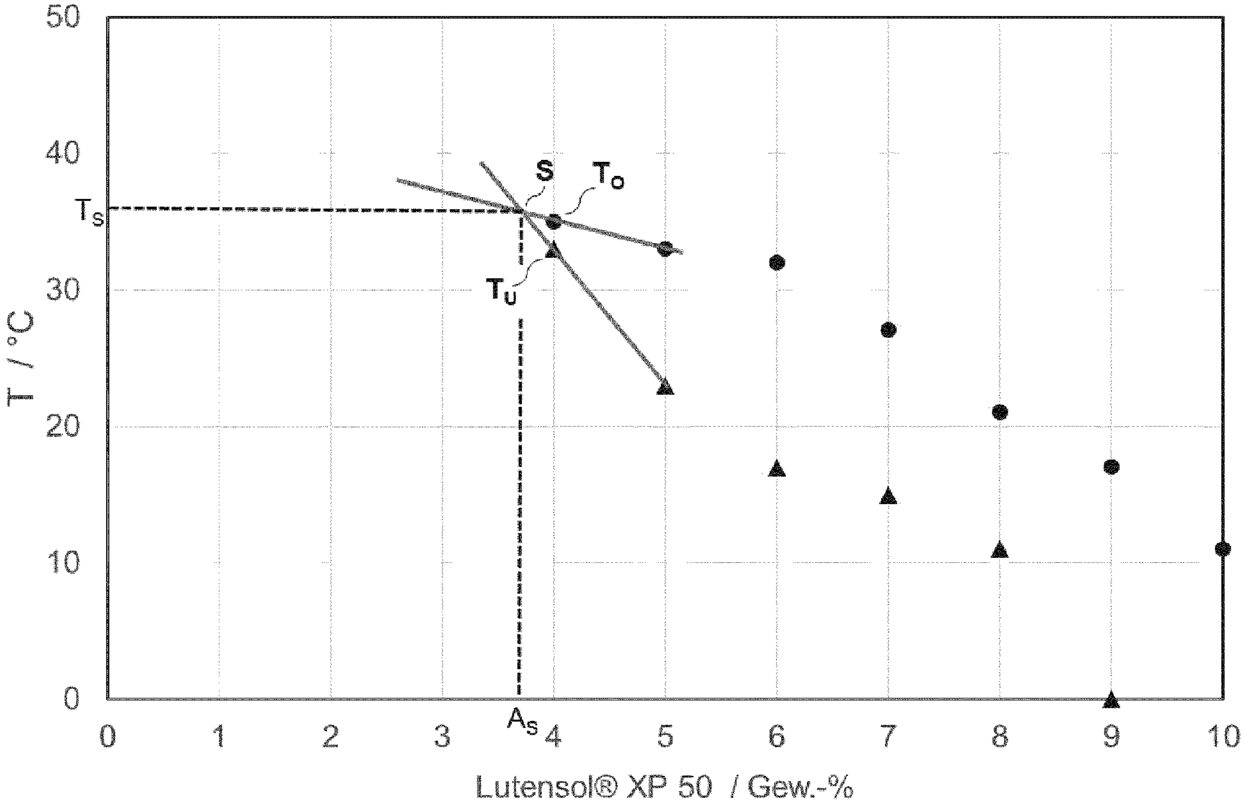

Europäisches Patentamt
European Patent Office
Office européen des brevets

# EUROPÄISCHER RECHERCHENBERICHT

Nummer der Anmeldung
EP 18 15 2315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/193649 A1 (ECO SOLUTIONS LTD [GB]) 23. Dezember 2015 (2015-12-23)<br>* Seite 14, Zeile 4 - Seite 15, Zeile 33; Ansprüche 1-3,7,8,13-17; Beispiele 1-5 *<br>* Seite 25, Zeilen 10-14, 20-27 *<br>* Seite 24, Zeilen 8-21 *<br>----- | 1-9, 11-14 | INV.<br>C09D9/04<br>C11D17/00 |
| X | US 5 158 710 A (VANEENAM DONALD N [US]) 27. Oktober 1992 (1992-10-27)<br>* Spalte 7, Zeile 58 - Spalte 8, Zeile 17; Ansprüche 1,3,6,7,14,15; Beispiele 2,4,19 *<br>----- | 1-14 | |
| X | WO 2009/037349 A2 (BUBBLES & BEYOND GMBH [DE]; SCHUMANN DIRK [DE]; SURKOW RAINER [DE]) 26. März 2009 (2009-03-26)<br>* Ansprüche 12-15; Beispiele 5,7,10,12 *<br>----- | 1-10,12, 14 | |
| X | WO 95/27034 A1 (UNILEVER PLC [GB]; UNILEVER NV [NL]) 12. Oktober 1995 (1995-10-12)<br>* Anspruch 1; Beispiele 2,3,6 *<br>----- | 15 | RECHERCHIERTE SACHGEBIETE (IPC)<br>C09D<br>C11D |

1

Der vorliegende Recherchenbericht wurde für alle Patentansprüche erstellt

| Recherchenort | Abschlußdatum der Recherche | Prüfer |
|---|---|---|
| München | 30. April 2018 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 15 2315

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2018

| Im Recherchenbericht angeführtes Patentdokument | Datum der Veröffentlichung | Mitglied(er) der Patentfamilie | Datum der Veröffentlichung |
|---|---|---|---|
| WO 2015193649 A1 | 23-12-2015 | AU 2015275868 A1 | 02-02-2017 |
| | | CA 2952598 A1 | 23-12-2015 |
| | | EP 3158013 A1 | 26-04-2017 |
| | | GB 2529343 A | 17-02-2016 |
| | | US 2017130078 A1 | 11-05-2017 |
| | | WO 2015193649 A1 | 23-12-2015 |
| US 5158710 A | 27-10-1992 | KEINE | |
| WO 2009037349 A2 | 26-03-2009 | AT 554743 T | 15-05-2012 |
| | | BR PI0817128 A2 | 27-10-2015 |
| | | CN 101861381 A | 13-10-2010 |
| | | CN 105779146 A | 20-07-2016 |
| | | EP 2045320 A1 | 08-04-2009 |
| | | EP 2195408 A2 | 16-06-2010 |
| | | EP 2223995 A2 | 01-09-2010 |
| | | JP 5844523 B2 | 20-01-2016 |
| | | JP 2010539316 A | 16-12-2010 |
| | | US 2011229424 A1 | 22-09-2011 |
| | | US 2014274855 A1 | 18-09-2014 |
| | | WO 2009037349 A2 | 26-03-2009 |
| WO 9527034 A1 | 12-10-1995 | AU 1894695 A | 23-10-1995 |
| | | CA 2173137 A1 | 12-10-1995 |
| | | DE 69503489 D1 | 20-08-1998 |
| | | DE 69503489 T2 | 03-12-1998 |
| | | EP 0753048 A1 | 15-01-1997 |
| | | ES 2119405 T3 | 01-10-1998 |
| | | IN 184051 B | 03-06-2000 |
| | | WO 9527034 A1 | 12-10-1995 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10014579 A1
- DE 102008027997 A1

### In der Beschreibung aufgeführte Nicht-Patentliteratur

- **H.-D. DÖRFLER.** Grenzflächen- und Kolloidchemie. VCH-Verlag, 1994